# EUROPÄISCHE PATENTSCHRIFT

(11) **EP 0 822 395 B1**
(45) Veröffentlichungstag und Bekanntmachung des Hinweises auf die Patenterteilung: **26.03.2003**
(21) Anmeldenummer: 97113097.6
(22) Anmeldetag: 30.07.1997
(51) Int. Cl.: G01J 3/44, G01J 3/457, G01N 15/02

(54) **Verfahren und Vorrichtung zur Raman-Korrelationsspektroskopie**
Method and apparatus for Raman correlation spectroscopy
Procédé et dispositif de spectroscopie à corrélation d'émission Raman

(30) Priorität: 31.07.1996 DE 19630956
(43) Veröffentlichungstag der Anmeldung: 04.02.1998
(73) Patentinhaber: BASF AKTIENGESELLSCHAFT, 67056 Ludwigshafen (DE)
(72) Erfinder: Schrof, Wolfgang, Dr., 67271 Neuleiningen (DE); Klingler, Jürgen, Dr., 67112 Mutterstadt (DE); Horn, Dieter, Dr., 69120 Heidelberg (DE)
(74) Vertreter: Isenbruck, Günter, Dr.

(56) Entgegenhaltungen:
- EP-A- 0 359 681
- EP-A- 0 557 658
- EP-B- 0 508 257
- DE-A- 4 429 239
- US-A- 5 037 200
- MARKWORT L ET AL: "RAMAN IMAGING OF HETEROGENEOUS POLYMERS: A COMPARISON OF GLOBAL VERSUS POINT ILLUMINATION" APPLIED SPECTROSCOPY,US,THE SOCIETY FOR APPLIED SPECTROSCOPY. BALTIMORE, Bd. 49, Nr. 10, 1. Oktober 1995 (1995-10-01), Seiten 1411-1430, XP000535206 ISSN: 0003-7028
- PRAUS, BOK, STEPANEK: "Adaptation of Raman Spectrometer to Statistical Signal Precessing" CZECHOSLOVAK JOURNAL OF PHYSICS, Bd. 41, Nr. 12, Dezember 1991 (1991-12), Seiten 1161-1170, XP000904747
- SHREVE A.P., CHEREPY N.J., MATHIES R.A.: 'Effective Rejection of Fluorescence Interference in Raman Spectroscopy Using a Shifted Excitation Difference Technique' APPLIED SPECTROSCOPY Bd. 46, Nr. 4, 01 April 1992, FREDERICK, MD,US, Seiten 707 - 711

## Beschreibung

Die vorliegende Erfindung bezieht sich auf ein Verfahren und eine Vorrichtung zur Raman-Spektroskopie. Dieses neuartige Verfahren erlaubt die Bestimmung von Diffusionsparametern, Konzentration, Größe und Strömungsverhalten von Partikeln in einer Probe auf besonders einfache Weise. Insbesondere wird ein neuartiges Verfahren und eine entsprechende Vorrichtung zur Korrelationsspektroskopie bereitgestellt. Dieses Verfahren kann man als Raman-Korrelationsspektroskopie bezeichnen.

Zur Bestimmung des Diffusionsverhaltens von Partikeln, wie Molekülen, Aggregaten oder auch größeren Teilchen, sind unterschiedliche Verfahren bekannt. Die einfachsten Verfahren zur Ermittlung der Diffusion von Teilchen sehen mikroskopische Beobachtungen vor, wobei die Teilchen zum Beispiel mit einem Farbstoff markiert sind. Damit können jedoch Partikel im Bereich der Molekülgröße nicht mehr beobachtet werden. Mit Verfahren der Fluoreszenzkorrelationsspektroskopie, wie sie etwa in DE-A 44 29 239 beschrieben sind, kann dagegen auch das Diffusionsverhalten sehr kleiner Partikel, im Bereich der Molekülgröße, ermittelt werden. Bei diesem Verfahren werden die zu beobachtenden Teilchen mit einem Fluoreszenzfarbstoff markiert, soweit sie nicht selbst fluoreszieren. Dann wird Anregungslicht in die Probe eingestrahlt und das Fluoreszenzlicht der Partikel detektiert. Aus dem zeitlichen Verlauf der Intensität einer bestimmten Fluoreszenzwellenlänge kann man, zum Beispiel durch Bildung einer Autokorrelationsfunktion oder mit Hilfe einer Frequenzanalyse, auf die Diffusionsparameter, wie die Diffusionsgeschwindigkeit bzw. den Diffusionskoeffizienten, schließen. Man kann aber auch die Teilchengröße der fluoreszierenden Teilchen bestimmen. Vorteil dieses Verfahrens ist die hohe Selektivität der Beobachtung, dem nur Signale fluoreszierender, in der Regel also speziell angefärbter Partikel werden aufgefangen und ausgewertet. Die Fluoreszenzkorrelationsspektroskopie hat jedoch den Nachteil, daß sie auf solche Teilchen beschränkt ist, die fluoreszieren bzw. die sich mit einem Fluoreszenzfarbstoff markieren lassen. Damit ist die Beobachtung der Diffusionseigenschaften bzw. der lokalen Konzentration von sehr kleinen Partikeln im Bereich der Molekülgröße nicht direkt möglich. Außerdem können nicht-fluoreszierende Partikel 'nicht ohne größere Vorbereitungen vermessen werden, was den Einsatz dieser Technologie zum Beispiel im Umweltschutz häufig stark einschränkt, etwa wenn direkt vor Ort, also nicht unter Laborverhältnissen gemessen werden muß.

Die Verfahren der Fluoreszenzkorrelationsspektroskopie werden in D. Madge, E.L. Elson, W.W. Webb, Phys. Rev. Lett. 29 (1972), 705-708; R. Riegler, P. Grasselli, M. Ehrenberg, Phys. Scr. 19 (1979), 486-490; und N.L. Thompson, "Topics in Fluorescence Spectroscopy, Vol. 1" (J.R. Lakowicz, Ed.), Plenum Press, New York, 1991, 337-410, erklärt. Korrelationsspektroskopische Verfahren werden allgemein in B.J. Berne, R. Pecora "Dynamic Light Scattering", Wiley, 1976, dargestellt.

Ein anderes Verfahren zur Untersuchung des Diffusionsverhaltens, der Größe, der Konzentration oder des Strömungsverhaltens von Partikeln ist die Photonenkorrelationsspektroskopie, bei der, ähnlich der Fluoreszenzkorrelationsspektroskopie, Anregungslicht in eine Probe eingestrahlt wird und quasielastisch gestreutes Licht aus der Probe aufgefangen und mit einer Fluktuationsanalyse ausgewertet wird. Vorteil dieses Verfahrens ist, daß es keine Markierung von Teilchen erfordert, denn jedes Teilchen streut Licht auch quasielastisch. Darin liegt aber zugleich auch die Schwäche des Verfahrens, denn die Beobachtungsselektivität sinkt dadurch beträchtlich.

Andererseits sind für die Analyse der Zusammensetzung einer Probe Verfahren der Raman-Spektroskopie bekannt, wie sie etwa in B. Schrader, "Infrared and Raman Spectroscopy", VCH Weinheim, 1995; L. Markwort, B. Kip, E. Da Silva, B. Roussel, "Resonance structures in elastic and Raman scattering from microspheres", Appl. Spectrosc. 49 (1995) 1411-1430; Chak K. Chan, Richard C. Flagan, John H. Seinfeld, "Enhancement of the Raman spectrum of optically levitated microspheres by seeded nanoparticles, Appl. Opt. (1. FEb. 1991) v. 30(4), S. 459-467; T. Kaiser, G. Roll, G. Schweiger, J. Opt. Soc. Am. B (1995), 12(2), S. 281-286, beschrieben sind. Dabei wird mit Hilfe der Messung von Molekülschwingungen und Molekülrotationen die chemische Zusammensetzung einer Probe ermittelt. Bei der Raman-Spektroskopie wird Anregungslicht in eine Probe gesandt und die spektrale Zusammensetzung des Streulichts bzw. die Intensität der einzelnen Spektrallinien des Streulichts ausgewertet. Die Raman-Spektroskopie verfügt zwar über hohe Selektivität, erlaubt aber keine Aussagen über das Diffusionsverhalten von Teilchen.

Aufgabe der vorliegenden Erfindung ist deshalb die Bereitstellung eines Verfahrens zur Bestimmung von Diffusionsparametern von Partikeln, wie der Diffusionsgeschwindigkeit und der Diffusionskonstanten, der lokalen Konzentration, der Größe und des Strömungsverhaltens von Partikeln, das gute Selektivität aufweist und das keine Markierung der zu beobachtenden Teilchen voraussetzt. Eine weitere Aufgabe besteht darin, eine entsprechende Vorrichtung bereitzustellen.

Diese Aufgabe wird gelöst durch ein Verfahren zur Bestimmung von Diffusionsparametern, Konzentration, Größe und Strömungsverhalten von Partikeln in einer Probe bereitgestellt, wobei Anregungslicht einer Lichtquelle in die Probe geleitet wird, und Streulicht aus einem Beobachtungsvolumen in der Probe aufgefangen und einem Spektrographen zugeführt wird. Dort wird es in seine Spektrallinien aufgespalten und die Intensität mindestens einer Spektrallinie wird mindestens 10 mal pro Sekunde mit jeweils einem Photodetektor pro Spektrallinie gemessen. Anschließend werden aus den gemessenen Intensitätswerten für die jeweilige Spektrallinie die gewünschten physikalischen Größen errechnet. Das können Diffusionsparameter, die Konzentration oder auch die Größe von Partikeln sein, denen die jeweiligen Spektrallinien zuzuordnen sind.

Es kann aber genauso auch Information über das Strömungsverhalten von Partikeln erhalten werden, wenn das Beobachtungsvolumen der Probe einem entsprechenden Fluß ausgesetzt wird. Die Berechnung erfolgt in einer oder mehreren Auswerteeinrichtungen, die in ihrem Aufbau im wesentlichen aus der Fluoreszenzkorrelationsspektroskopie bekannt sind. Dabei wird die zeitabhängige Intensität einer Fluktuationsanalyse unterworfen, das heißt man wertet mit einem geeigneten rechnerischen Modell den Verlauf der Intensität einer bestimmten Spektrallinie aus und berechnet daraus die gewünschten Größen. Derartige Modelle sind in der Korrelationsspektroskopie allgemein bekannt. Man kann zum Beispiel die Autokorrelationsfunktion der Intensität bilden, wie es in DE-A 44 29 239 beschrieben ist. Statt dessen kann aber auch eine Frequenzanalyse angewendet werden, zum Beispiel über eine Fourierzerlegung des zeitlichen Verlaufs der Intensität. Damit ist es möglich, nicht nur Information über Art und Struktur, sondern auch über Größe und Diffusionsverhalten der beobachteten Partikel zu erhalten. Das erfindungsgemäße Verfahren der Raman-Korrelationsspektroskopie verbindet dabei die Selektivität der Fluoreszenzkorrelationsspektroskopie mit der variablen Einsetzbarkeit der Photonenkorrelationsspektroskopie, denn einerseits können die Spektrallinien von ganz bestimmten Teichen betrachtet werden und andererseits ist eine Markierung dieser Teilchen überflüssig. Statt einer Spektrallinie kann dabei, wie auch im Folgenden, immer auch eine Spektralbande, also mehrere nahe beieinander liegende Spektrallinien beobachtet und ausgewertet werden.

Bei dem erfindungsgemäßen Verfahren wird das Anregungslicht durch eine beliebige, möglichst aber monochromatische Lichtquelle bereitgestellt. Vorzugsweise wird ein Laser verwendet. Das Anregungslicht wird dann über eine Optik oder mit Hilfe von Lichtwellenleitern in die Probe geleitet. Diese Probe enthält die zu beobachtenden Teilchen. Dabei können die beobachteten Teilchen sowohl Moleküle oder Aggregate, wie auch größere Teilchen sein. Diese Partikel können zum Beispiel in einer Flüssigkeit suspendiert sein, sie können sich aber auch in einer anderen Probe befinden, die die freie Beweglichkeit der Partikel nicht zu sehr einschränkt. Das Anregungslicht wird von den Partikeln in der Probe inelastisch gestreut, sodaß frequenzverschobenes Streulicht die Probe verläßt. Dieses Raman-Streulicht wird mit Hilfe einer Optik oder mit Hilfe von Lichtwellenleitern aufgenommen und einem Spektrographen, vorzugsweise einem Gitterspektrographen, zugeführt, der das Streulicht in die einzelnen Spektrallinien zerlegt. Die Intensität dieser Spektrallinien wird dann, wie oben beschrieben, ausgewertet.

Um dabei Fluktuationen beobachten zu können, also Aussagen über die Diffusion in einem begrenzten Beobachtungsgebiet machen zu können, muß das Beobachtungsvolumen in der Probe genau definiert und von der richtigen Größe sein. Die Größe des Beobachtungsvolumens beträgt typischerweise von 0,1 µm³ bis zu 50.000 µm³, wobei die Größe des Beobachtungsvolumens vor allem von der Teilchengröße, aber auch von deren Konzentration und anderen Parametern abhängt. Die Definition des Probenvolumens erfolgt entweder durch eine konfokale Optik im Strahlengang des Anregungslichts und eine Blende im Strahlengang des Streulichts oder durch andere geeignete Maßnahmen, wie zum Beispiel die Verwendung von Lichtwellenleitern, insbesondere von Hohlleitern. Bei Verwendung einer konfokalen Optik, wie sie in T. Wilson, C. Sheppard, "Theory and Practice of Scanning Optical Microscopy", Academic Press, New York, 1984, und T. Wilson (Ed.), "Confocal Microscopy", Academic Press, London (1984) beschrieben ist, wird der Anregungslichtstrahl auf einen Punkt in oder nahe der Probe fokussiert, sodaß das Beobachtungsvolumen in seinem Querschnitt durch den Rand des so festgelegten Anregungslichtkegels definiert ist. Die Tiefe des Volumens, aus dem Streulicht ausgewertet wird, ergibt sich bei dieser Lösung aus Öffnung und Anordnung der Blende in dem Strahlengang des Streulichts. Streulicht das aus höheren oder tieferen Schichten der Probe kommt wird nämlich einfach ausgeblendet. Bei der Verwendung von Lichtwellenleitern, wie sie für die Fluoreszenzkorrelationsspektroskopie bereits in DE-A 44 29 329 beschrieben ist, kann das Beobachtungsvolumen durch einen einzelnen Lichtwellenleiter definiert werden, der in die Probe getaucht oder an dem durchsichtigen Probenglas außen angebracht wird. Die Definition des Probenvolumens beruht hier darauf, daß aus der Austrittsöffnung des Lichtwellenleiters, die einen sehr geringen Querschnitt aufweist, Licht fast nur in Achsenrichtung des Lichtwellenleiterendes in die Probe austreten kann. Die Begrenzung des Beobachtungsvolumens in Achsenrichtung erfolgt dann durch die Abnahme der Intensität des in die Lichtleitfaser zurückgestreuten Raman-Streulichts mit der vierten Potenz des Abstands des streuenden Teilchens von dem Ende der Lichtleitfaser. Eine andere Möglichkeit der Definition des Beobachtungsvolumens besteht darin, daß man zwei Lichtwellenleiter, einen für die Emission des Anregungslichts und einen für die Aufnahme des Streulichts, in einem Winkel zueinander anordnet, sodaß das Überdeckungsvolumen des Emissions- und des Aufnahmelichtkegels das Beobachtungsvolumen ergibt.

Die Häufigkeit der Messung der Intensität der jeweiligen Spektrallinie hängt von der gewünschten zeitlichen Auflösung der Messung ab. Um Aussagen über die Diffusion von Teilchen machen zu können, sollte man aber mindestens zehnmal pro Sekunde die Intensität der interessierenden Spektrallinie ermitteln. Für diese zeitliche Auflösung sind Photodetektoren geeignet, die schnell ansprechen und eine niedrige Relaxationszeit haben, wie zum Beispiel geeignete Photomultiplier oder Photodioden. Danach kann aus den ermittelten Intensitäten die Autokorrelationsfunktion errechnet bzw. die Fourierzerlegung oder ein anderes geeignetes Auswerteverfahren durchgeführt werden.

Bei der Verwendung eines Lasers oder einer anderen monochromatischen Lichtquelle für das Anregungslicht ist es vorteilhaft, einen Notchfilter in den Strahlengang des Streulichts zu schalten, um reflektiertes, nicht-frequenzverschobenes Anregungslicht von dem Streulicht abzutrennen und so die spätere Spektralanalyse zu erleichtern. Der Notchfilter kann auch dazu verwendet werden, den einfallenden Anregungslichtstrahl umzulenken, da er eben diese bestimmte Wellenlänge zu einem sehr hohen Grad reflektiert und kaum transmittiert.

Bei der Verwendung eines Lasers ist es außerdem vorteilhaft, diesen im Pulsbetrieb, also nicht-kontinuierlich zu verwenden. Denn die durch das Laserlicht eventuell auch angeregte Fluoreszenzemission von Probenpartikeln, die dem Streulicht überlagert ist, reagiert mit einiger Zeitverzögerung auf die Lichteinstrahlung, während die Streuung sofort, das heißt mit einer vernachlässigbaren Reaktionszeit, einsetzt. Verwendet man also eine gepulste Lichtquelle, so kann man während des Pulses das Streulicht messen und das zeitlich nachfolgende Fluoreszenzlicht durch Wahl eines entsprechenden Zeitfensters fiir die Analyse zeitlich ausblenden.

Erfindungsgemäß wird ein Verfahren bereitgestellt zur Bestimmung von Diffusionsparametern, Konzentration, Größe oder Strömungsverhalten von in einer flüssigen Probe suspendierten Partikeln in einer Probe dadurch gekennzeichnet, daß Anregungslicht eines Lasers in die Probe geleitet wird, Raman-Streulicht aus einem definierten Beobachtungsvolumen der Probe, das entweder durch eine konfokale Optik mit konfokaler Blende oder durch Verwendung von Lichtwellenleiternauf eine Größe von 0,1µm³ bis 50 000 µm³ begrenzt ist, aufgefangen und einem Spektrographen, vorzugsweise einem Gitterspektrographen, zugeführt wird, der es in Spektrallinien aufspaltet, die Intensität mindestens einer Spektrallinie mindestens 10 mal pro Sekunde mit jeweils einem schnell ansprechenden Photodetektor mit kurzer Relaxationszeit, vorzugsweise einem Photomultiplier oder einer Photodiode, gemessen wird, und aus den gemessenen Intensitätswerten für die jeweilige Spektrallinie Diffusionsparameter, Konzentration, Größe oder Strömungsverhalten der Partikel, denen die jeweilige Spektrallinie zuzuordnen ist, durch eine Fluktuationsanalyse, vorzugsweise eine Autokorrelation oder eine Frequenzanalyse, der Intensitätswerte berechnet werden.

Im Rahmen der Erfindung bevorzugt ist ein Verfahren, bei dem die Intensität von mindestens zwei verschiedenen Spektrallinien der Raman-Streuung gemessen wird und bei dem die Korrelation des Diffusionsverhaltens derjenigen Partikel, denen die jeweiligen Spektrallinien zugeordnet sind, bestimmt wird. Dazu werden die Einzelsignale vorzugsweise mit Hilfe einer Kreuzkorrelationsfunktion miteinander korreliert. Es können aber auch andere geeignete Korrelationsverfahren angewendet werden. So sind Aussagen darüber möglich, ob mehrere Partikelarten korreliert, also gemeinsam miteinander fluktuieren. Daraus läßt sich zum Beispiel der Schluß ziehen, daß bestimmte Moleküle miteinander verbunden sind oder sich auf einem bestimmten Träger befinden. Dabei können prinzipiell beliebig viele Spektrallinien beobachtet und ausgewertet werden. Für jede Spektrallinie wird dann ein Beobachtungskanal oder auch ein eigener Photodetektor vorgesehen.

Im Rahmen der Erfindung wird auch ein weiteres Verfahren bereitgestellt, bei dem neben dem Raman-Streulicht auch Fluoreszenzlicht oder quasielastisch gestreutes Anregungslicht aus dem Beobachtungsvolumen der Probe aufgenommen und ausgewertet wird. Das Raman-Streulicht wird dabei, wie oben beschrieben, angeregt, detektiert und ausgewertet. Daneben entsteht, wie bereits angesprochen, immer auch Fluoreszenzlicht, wenn die Probe fluoreszierende Teilchen enthält. Andernfalls können die Probenpartikel mit geeigneten Fluoreszenzfarbstoffen angefärbt werden. Auch quasielastisch gestreutes Licht entsteht immer neben dem zum Raman-Effekt führenden inelastisch gestreuten Licht. Die Detektierung des Fluoreszenzlichts und des quasielastisch gestreuten Lichts kann in demselben Strahlengang erfolgen, in dem auch das Raman-Streulicht aus der Probe abgeleitet wird. Vor dem Auftreffen auf den Spektrographen müssen diese zusätzlichen Komponenten dann entweder mit geeigneten Maßnahmen abgeleitet und separat ausgewertet oder gemeinsam mit dem Raman-Streulicht ausgewertet werden. Dabei kann mit der Intensität des Fluoreszenzlichts und des quasielastischen Streulichts eine Fluktuationsanalyse, wie oben beschrieben also etwa eine Autokorrelation oder Frequenzanalyse, durchgeführt werden, die über die verschiedenen Parameter Aufschluß gibt, die im Rahmen der Fluoreszenz- bzw. Photonenkorrelationsspektroskopie ermittelt werden können. Besonders interessante Feststellungen lassen sich allerdings dann treffen, wenn die Signale der Raman-Streuung, der quasielastischen Streuung und der Fluoreszenz miteinander korreliert werden, z.B. unter Verwendung einer Kreuzkorrelationsfunktion. Dann kann nämlich festgestellt werden, welche Teilchen miteinander verbunden sind oder sich typischerweise ähnlich oder auch völlig verschieden verhalten.

Eine weitere vorteilhafte Ausgestaltung des erfindungsgemäßen Verfahrens ergibt sich, wenn man die Wellenlänge des Anregungslichts derart wählt, daß sie nahe an einer Absorptionsfrequenz einer beobachteten Partikelsorte liegt, weil dadurch das Streulicht durch den sogenannten Resonanzramaneffekt verstärkt wird. Zur Ausnutzung dieses Effekts muß die Lichtquelle allerdings speziell für die beobachtete Partikelsorte gewählt werden. Außerdem ist es vorteilhaft, das Anregungslicht oder das Streulicht durch Resonanz in einem die Lichtquelle und/oder die Probe enthaltenden Behälter zu verstärken. Beispiele hierfür sind Fabry-Perot-Resonatoren oder mikromechanisch hergestellte, verspiegelte Behälter, die derart dimensioniert sind, daß die Bedingungen für eine Resonanzverstärkung des Anregungslichts oder des Raman-Streulichts erfüllt sind.

Erfindungsgemäß wird auch eine zur Durchführung eines der oben beschriebenen Verfahrens geeignete Vorrichtung zur Bestimmung von Diffusionsparametern, Konzentration, Größe oder Strömungsverhalten von Partikeln in einer flüssigen oder anderen Probe, die die freie Beweglichkeit der Partikel nicht zu sehr einschränkt, bereitgestellt, die mindestens folgende Elemente aufweist: Eine Lichtquelle, vorzugsweise einen Laser, zur Erzeugung von Anregungslicht, eine mit der Lichtquelle verbundene erste Optik zur Einleitung des Anregungslichts in die Probe, eine mit der Probe verbundene zweite Optik zur Sammlung und Weiterleitung von Streulicht aus einem Beobachtungsvolumen der Probe, einen mit der zweiten Optik verbundenen Spektrographen, vorzugsweise einen Gitterspektrographen, zur spektralen Zerlegung des Streulichts aus der Probe, eine dritte Optik zur Weiterleitung spektraler Anteile des Streulichts zu mindestens einem Photodetektor, und mindestens einer Auswerteeinheit zur Berechnung von Diffusionsparametern, Konzentration, Größe oder Strömungsverhalten von in der Probe befindlichen Partikeln durch eine Fluktuationsanalyse, wie oben beschrieben. Gegebenenfalls wird eine Kreuzkorrelation von mehreren Spektrallinien gebildet. Die Erläuterungen, die oben zu den einzelnen Elementen bzw. Verfahrensschritten gegeben wurden, gelten hier entsprechend.

Bevorzugt ist eine erfindungsgemäße Vorrichtung, bei der die erste und/oder die zweite Optik Lichtleitfasern zur Einleitung des Anregungslichts in die Probe und/oder zur Aufnahme des Lichts aus dem Beobachtungsvolumen in der Probe enthält.

Die Erfindung wird im folgenden anhand der Zeichnung beschrieben. Dabei zeigen:
- Figur 1:: Schematischer Aufbau einer Vorrichtung zur Anwendung der erfindungsgemäßen Raman-Korrelationsspektroskopie mit Auswertung einer Spektrallinie bzw. Spektralbande.
- Figur 2:: Schematischer Aufbau einer Vorrichtung zur Anwendung der erfindungsgemäßen Raman-Korrelationsspektroskopie mit Auswertung mehrerer Spektrallinien bzw. Spektralbanden.
- Figur 3:: Schematischer Aufbau einer Vorrichtung zur Anwendung der erfindungsgemäßen Raman-Korrelationsspektroskopie mit Auswertung von Raman-Streulicht und Fluoreszenzlicht.
- Figur 4:: Schematischer Aufbau einer Vorrichtung zur Anwendung der erfindungsgemäßen Raman-Korrelationsspektroskopie mit Auswertung von Raman-Streulicht und quasielastisch gestreutem Licht.

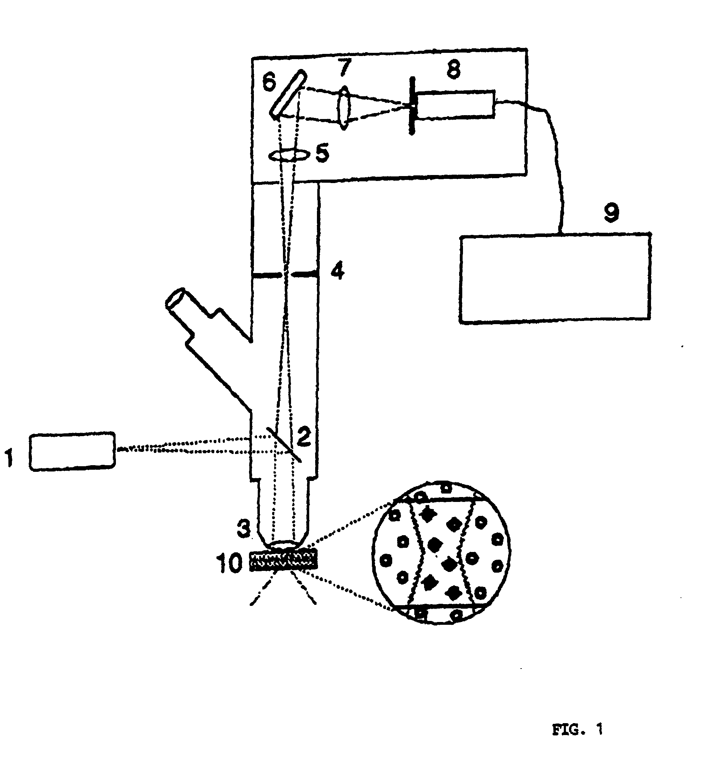

Figur 1 zeigt eine erfindungsgemäße Vorrichtung zur Durchführung des erfindungsgemäßen Verfahrens der Raman-Korrelationsspektroskopie. Die Vorrichtung beruht im wesentlichen auf einer Kombination eines konfokalen Mikroskops mit einer Laserlichtquelle und einem Raman-Spektrometer. Das Anregungslicht einer Laserlichtquelle 1 wird hier von einem Notchfilter 2 umgeleitet, sodaß es über eine Linse 3 in die Probe 10 gelangt, die die zu untersuchenden Partikel enthält. Ein Notchfilter ist für die Umlenkung besonders geeignet, weil er die bestimmte Laserwellenlänge fast vollständig reflektiert. Es können aber auch herkömmliche Spiegelanordnungen verwendet werden. Die Linse 3 definiert den Querschnitt des Beobachtungsvolumens in der Probe 10, da sie das Anregungslicht des Lasers 1 fokussiert und der entstehende Lichtkegel die Ausbreitung des Laserlichts in der Probe senkrecht zur Einfallsrichtung begrenzt. Das in der Probe 10 inelastisch gestreute Laserlicht wird aus der Probe über Linse 3 aufgenommen und über den Notchfilter 2, der dabei aus der Probe 10 reflektiertes Anregungslicht wegfiltert, zu einer Blende 4 weitergeleitet. Diese Blende 4 legt durch ihre Ausblendwirkung die Tiefe des Beobachtungsvolumens in der Probe 10 fest, also dessen Ausdehnung in Einfallsrichtung des Anregungslichts. Nach der Blende 4 gelangt das Raman-Streulicht über eine Linse 5 zu einem Gitterspektrographen 6, der das Streulicht spektral zerlegt. Die einzelnen Spektrallinien werden dann über eine weitere Linse 7 zu dem Photodetektor 8 geleitet, mit dessen Hilfe die Intensität der Spektrallinie gemessen wird. In einer Auswerteeinheit 9 wird dann der zeitliche Verlauf der Intensität jeder Spektrallinie einer Fluktuationsanalyse unterworfen, also zum Beispiel eine Autokorrelationsfunktion gebildet oder eine Frequenzanalyse durchgeführt.

Dabei können als Auswerteeinheit sowohl Hardwarekorrelatoren, Hardwarefrequenzanalysatoren wie auch Standard-Computer mit entsprechender Software verwendet werden. Mit Hilfe dieser Funktionen können dann in bekannter Weise Diffusionsparameter, Konzentration, Größe und Strömungsverhalten einzelner Partikel ermittelt werden.

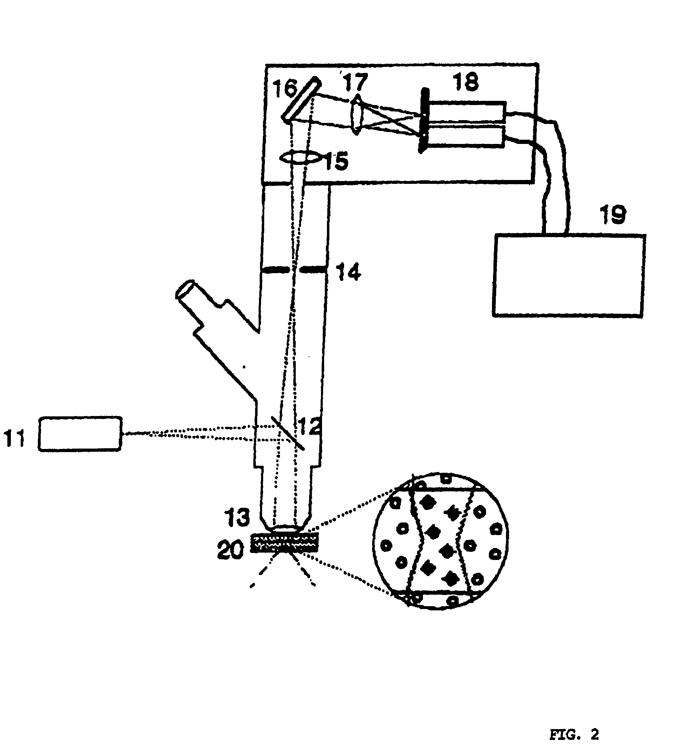

Figur 2 zeigt eine bevorzugte erfindungsgemäße Vorrichtung, bei der, wie oben beschrieben, das Anregungslicht eines Lasers 11 über einen Notchfilter 12 und eine Linse 13 in eine Probe 20 eingeleitet wird. Das Raman-Streulicht wird dann über Linse 13, Notchfilter 12, eine Blende 14 und eine Linse 15 zu einem Gitterspektrographen 16 geleitet, von wo aus spektrale Anteile des Raman-Streulichts über Linse 17 zu den beiden Photodetektoren 18 geleitet werden. Jeder Photodetektor ist hier fiir eine Spektrallinie oder auch für eine Spektralbande, also eine Serie von Spektrallinien, zuständig. Dabei wird die Intensität der Spektrallinien in Auswerteeinheit 19 zunächst separat ermittelt und dann kreuzkorreliert, sodaß entsprechende Rückschlüsse auf die Korrelation des Diffusionsverhaltens verschiedener Teilchen gezogen werden können. Statt zweier Detektoren können auch mehrere Photodetektoren angebracht sein, um das Diffusionsverhalten mehrerer Teilchensorten zugleich erfassen zu können.

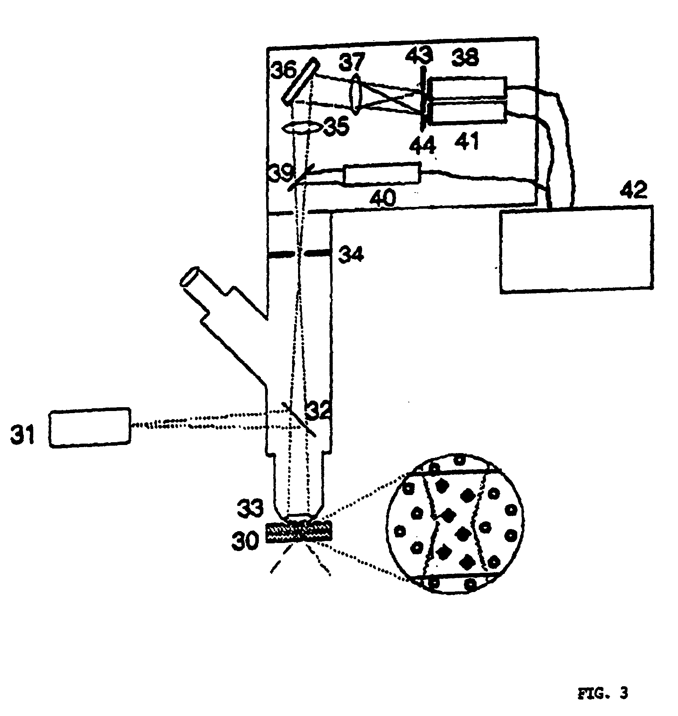

Figur 3 zeigt eine Anordnung zur gleichzeitigen Auswertung von Raman-Streulicht und Fluoreszenzlicht. Dabei wird Anregungslicht eines Lasers 31 auf einen Notchfilter 32 gelenkt, der das Anregungslicht auf eine Linse 33 reflektiert. Die Linse 33 fokussiert den Anregungslichtstrahl in Probe 30. Aus dem Probenvolumen reflektiertes Licht wird über Linse 33, Notchfilter 32 und Blende 34 auf einen dichroitischen Filter 39 geleitet. Der Filter 39 dient zur Ausblendung von Fluoreszenzlicht aus der Probe auf den zusätzlichen Detektor 40. Das Raman-Streulicht wird durch Filter 39 und eine Linse 35 auf einen Spektrographen 36 geleitet, der das Raman-Streulicht über eine Linse 37 und Blenden 43 und 44 auf Detektoren 38 und 41 umlenkt. Alle Detektoren 38, 41 und 40 sind mit einer Auswerteeinheit 42 verbunden. Vorzugsweise wird dort eine Kreuzkorrelation zwischen einem Signal aus Detektor 38 oder 41 und dem Signal aus Detektor 40 berechnet. Auf diese Weise kann sowohl die Information, die sich aus dem Verhalten der fluoreszierenden Teilchen ergibt, wie auch diejenige Information, die sich aus der Analyse des Raman-Streulichts ergibt, miteinander verbunden werden. Der dichroitische Filter 39 und der zusätzliche Detektor 40 können aber auch weggelassen werden. Das Fluoreszenzlicht wird dann, zusammen mit dem Raman-Streulicht, dem Gitterspektrographen 36 zugeleitet, der diese Anteile aufgrund ihrer verschiedenen Frequenzen trennt. Die getrennten Anteile können dann in den Detektoren 38 und 41 analysiert werden, als ob es einfach verschiedene Wellenlängen des Raman-Streulichts wären.

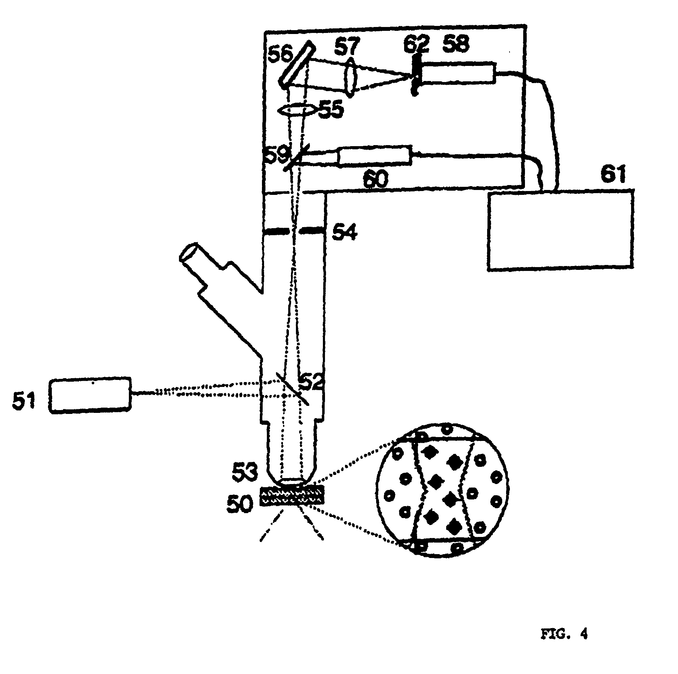

Figur 4 zeigt eine weitere erfindungsgemäße Anordnung, die sich von der in Figur 1 gezeigten Anordnung durch die Anbringung eines weiteren Notchfilters 59 zwischen Blende 54 und Linse 55 und durch einen zusätzlichen Detektor 60 unterscheidet. Mit Hilfe dieses weiteren Notchfilters 59 kann quasielastisch gestreutes Licht aus der Probe 50 auf den zusätzlichen Detektor 60 umgeleitet werden, der wie Detektor 58 für das Raman-Streulicht, mit einer Auswerteeinheit 61 verbunden ist. In dieser Auswerteeinheit 61 wird vorzugsweise das Signal des Raman-Streulichts aus Detektor 58 mit dem Signal des quasielastisch gestreuten Lichts aus Detektor 60 kreuzkorreliert. So können auch hier besondere Aussagen hinsichtlich der Teilchenkorrelation getroffen werden. Bei dieser Anordnung kann der erste Notchfilter 52 auch durch einen dichroitischen Spiegel ersetzt werden, um das Signal des quasielastisch gestreuten Lichts nicht zu schwach werden zu lassen.

Natürlich können die beiden in Figur 3 und 4 beschriebenen Verfahren auch miteinander kombiniert werden. Es können dann mit demselben Verfahren oder mit derselben Meßvorrichtung sowohl Anteile von Raman-Streulicht, wie auch von quasielastisch gestreutem Licht oder Fluoreszenzlicht gemessen und ausgewertet werden. Dabei kann prinzipiell jedes Signal mit jedem anderen Signal korreliert werden.

Anwendungsgebiete der Erfindung sind unter anderem Medizin, Umweltschutz und allgemeine analytische Chemie. Das erfindungsgemäße Verfahren kann insbesondere zur Kontrolle von Reaktionen in einem Partikel oder zwischen Partikeln oder von Prozessen des Teilchenwachstums oder der Auffällung von Substanzen verwendet werden. Beispiele sind die Kontrolle des Teilchenwachstums und der Polymerisation bei Verfahren der Emulsionspolymerisation, die Analyse und Kontrolle der Herstellung von Mischungen von Partikeln unterschiedlicher Größe oder Zusammensetzung, die Analyse und Kontrolle der Herstellung von belegten Teilchen, etwa bei Fällungsprozessen, und die Analyse und Kontrolle der Herstellung von mit Bindemitteln belegten Pigmenten. Weitere Beispiele sind die Analyse und Kontrolle der Herstellung von Partikelmischungen nach Teilchensorte und Teilchengröße, die Verfolgung der Veränderung der Morphologie und Größe von Pigmenten, wobei die Veränderung der Morphologie durch die Analyse der Raman-Verschiebung und die Bestimmung der Größe der Teilchen mit Hilfe der erfindungsgemäßen Raman-Korrelationsspektroskopie vorgenommen werden kann. Mit Hilfe dieses erfindungsgemäßen Verfahrens können auch Katalyseverfahren, Quellverfahren, Flockungsprozesse und Oberflächenbelegungen in situ verfolgt und gesteuert werden. In der Biologie besteht beispielsweise das Einsatzgebiet des Wirkstoffscreenings und der Analyse der Bioverfügbarkeit von Teilchen. Analytische Verwendungen bestehen zum Beispiel bei der Gasbläschenanalytik.

## Patentansprüche

1. Verfahren zur Bestimmung von Diffusionsparametern, Konzentration, Größe oder Strömungsverhalten von in einer flüssigen Probe suspendierten Partikeln, **dadurch gekennzeichnet, daß** Anregungslicht eines Lasers in die Probe geleitet wird, Raman-Streulicht aus einem definierten Beobachtungsvolumen der Probe, das entweder durch eine konfokale Optik mit konfokaler Blende oder durch Verwendung von Lichtwellenleitern auf eine Größe von 0,1 µm³ bis 50 000 µm³ begrenzt ist, aufgefangen und einem Spektrographen, vorzugsweise einem Gitterspektrographen, zugeführt wird, der es in Spektrallinien aufspaltet, die Intensität mindestens einer Spektrallinie mindestens 10 mal pro Sekunde mit jeweils einem schnell ansprechenden Photodetektor mit kurzer Relaxationszeit, vorzugsweise einem Photomultiplier oder einer Photodiode, gemessen wird, und aus den gemessenen Intensitätswerten für die jeweilige Spektrallinie Diffusionsparameter, Konzentration, Größe oder Strömungsverhalten der Partikel, denen die jeweilige Spektrallinie zuzuordnen ist, durch eine Fluktuationsanalyse, vorzugsweise eine Autokorrelation oder eine Frequenzanalyse, der Intensitätswerte berechnet werden.

2. Verfahren nach Anspruch 1, **dadurch gekennzeichnet, daß** die Intensität von mindestens zwei Spektrallinien gemessen wird und daraus, vorzugsweise unter Bildung einer Kreuzkorrelationsfunktion, die Korrelation des Diffusionsverhaltens der Partikel, denen die jeweiligen Spektrallinien zuzuordnen sind, bestimmt wird.

3. Verfahren nach einem der vorhergehenden Ansprüche, **dadurch gekennzeichnet, daß** Raman-Streulicht aus der Probe von einer Linse auf einen Notchfilter gelenkt wird, und das durch den Notchfilter hindurchtretende Licht durch eine Blende und anschließend zu dem Spektrographen gelenkt wird.

4. Verfahren nach einem der vorhergehenden Ansprüche, **dadurch gekennzeichnet, daß** das Anregungslicht mit Hilfe von Lichtleitfasern in die Probe eingeleitet und/oder das Raman-Streulicht mit Hilfe von Lichtleitfasern aus der Probe aufgenommen wird.

5. Verfahren nach einem der vorhergehenden Ansprüche, **dadurch gekennzeichnet, daß** neben dem Raman-Streulicht reflektiertes Fluoreszenzlicht oder quasielastisch gestreutes Anregungslicht aus der Probe aufgenommen und ausgewertet wird.

6. Verfahren nach Anspruch 5, **dadurch gekennzeichnet, daß** ein Signal des Raman-Streulichts mit einem Signal des reflektierten Fluoreszenzlichts oder mit einem Signal des quasielastisch gestreuten Anregungslichts kreuzkorreliert wird.

7. Verfahren nach einem der vorhergehenden Ansprüche, **dadurch gekennzeichnet, daß** die Wellenlänge des Anregungslichts derart gewählt wird, daß sie nahe an einer Absorptionsfrequenz einer in der Probe befindlichen Partikelsorte liegt, sodaß das Raman-Streulicht durch Resonanz verstärkt wird.

8. Verfahren nach einem der vorhergehenden Ansprüche, **dadurch gekennzeichnet, daß** das Anregungslicht und/oder das Raman-Streulicht durch Resonanz in einem die Lichtquelle und/oder die Probe enthaltenden Behälter verstärkt wird.

9. Verfahren nach einem der vorhergehenden Ansprüche, **dadurch gekennzeichnet, daß** Anregungslicht einer Laserlichtquelle (1, 11, 31, 51) zu einem Notchfilter (2, 12, 32, 52) geleitet und an diesem auf eine Linse (3, 13, 33, 53) reflektiert wird, die das Anregungslicht fokussiert und in eine Probe (10, 20, 30, 50) mit Partikeln lenkt,
Raman-Streulicht aus der Probe (10, 20, 30, 50) mittels der Linse (3, 13, 33, 53) aufgenommen und über Notchfilter (2, 12, 32, 52), über eine Blende (4, 14, 34, 54) und über eine Linse (5, 15, 35, 55) auf einen Spektrographen (6, 16, 36, 56) geleitet wird, der das Raman-Streulicht in Spektrallinien zerlegt,
das Licht mindestens einer Spektrallinie über eine Linse (7, 17, 37, 57) zu jeweils einem Photodetektor (8, 18, 38, 41, 58) geleitet wird, mit dem die Intensität der Spektrallinie mindestens 10 mal pro Sekunde gemessen wird, und
in einer Auswerteeinheit (9, 19, 42, 61) durch eine Fluktuationsanalyse, vorzugsweise eine Autokorrelation oder eine Frequenzanalyse, der Intensität, oder, bei der Beobachtung von mindestens zwei Spektrallinien, durch eine Kreuzkorrelation der Intensitäten von Spektrallinien, Diffusionsparameter, Konzentration, Größe oder Strömungsverhalten von Partikeln in der Probe (10, 20, 30, 50) bestimmt werden.

10. Verfahren nach Anspruch 9, **dadurch gekennzeichnet, daß** aus der Probe (30) aufgefangenes Licht, das neben Raman-Streulicht auch Fluoreszenzlicht enthält, auf einen nach der Blende (34) angeordneten dichroitischen Filter (39) gelenkt wird, der das Fluoreszenzlicht aus dem Strahlengang ausblendet und einem Detektor (40) zuleitet, der mit der Auswerteeinheit (42) verbunden ist, wobei das Signal des Raman-Streulichts und das Signal des Fluoreszenzlichts in Auswerteeinheit (42) kreuzkorreliert werden.

11. Verfahren nach Anspruch 9, **dadurch gekennzeichnet, daß** aus der Probe (30) aufgenommenes Licht, das neben Raman-Streulicht auch Fluoreszenzlicht enthält, von dem Gitterspektrographen (36) in einen Anteil Raman-Streulicht und in einen Anteil Fluoreszenzlicht getrennt wird, wobei die Anteile getrennt über Linse (37) in die Photodetektoren (38, 41) geleitet werden, und wobei das Signal des Raman-Streulichts und das Signal des Fluoreszenzlichts in Auswerteeinheit (42) kreuzkorreliert werden.

12. Verfahren nach Anspruch 9, **dadurch gekennzeichnet, daß** aus der Probe (50) aufgenommenes Licht, das neben Raman-Streulicht auch quasielastisches Streulicht enthält, auf einen nach der Blende (54) angeordneten weiteren Notchfilter (59) gelenkt wird, der quasielastisch gestreutes Licht aus dem Strahlengang ausblendet und einem Detektor (60) zuleitet, der mit der Auswerteeinheit (61) verbunden ist, wobei das Signal des Raman-Streulichts und das Signal des quasielastisch gestreuten Lichts in Auswerteeinheit (61) kreuzkorreliert werden.

13. Vorrichtung zur Bestimmung von Diffusionsparametern, Konzentration, Größe oder Strömungsverhalten von Partikeln in einer flüssigen oder anderen Probe, die die freie Beweglichkeit der Partikel nicht zu sehr einschränk, die mindestens folgende Elemente umfasst:
eine Laserlichtquelle (1, 11, 31, 51) zur Aussendung von Anregungslicht,
eine Linse (3, 13, 33, 53) zur Bündelung des Anregungslichts und zur Einleitung des Anregungslichts in eine Probe (10, 20, 30, 50) mit Partikeln,
einen Notchfilter (2, 12, 32, 52), der zwischen der Lichtquelle (1, 11, 31, 51) und der Linse (3, 13, 33, 53) so angeordnet ist, daß das Anregungslicht auf die Linse (3, 13, 33, 53) reflektiert wird, wobei der Notchfilter (2, 12, 32, 52) und die Linse (3, 13, 33, 53) zueinander und zur Probe (10, 20, 30, 50) derart angeordnet sind, daß Raman-Streulicht, und gegebenenfalls Fluoreszenzlicht, aus der Probe (10, 20, 30, 50) durch die Linse (3, 13, 33, 53) und den Notchfilter (2, 12, 32, 52) geleitet wird,
eine Blende (4, 14, 34, 54) und eine Linse (5, 15, 35, 55) zur Weiterleitung des aufgenommenen Raman-Streulichts, und gegebenenfalls Fluoreszenzlichts, von dem Notchfilter (2, 12, 32, 52),
einen Spektrographen (6, 16, 36, 56) zur Aufspaltung des von der Linse (5, 15, 35, 55) zugeleiteten Raman-Streulichts, und gegebenenfalls Fluoreszenzlichts, in Spektrallinien, mindestens einen Photodetektor (8, 18, 38, 41, 58) mit dem die Intensität des 5 Raman-Streulichts bzw. Fluoreszenzlichts jeweils einer Spektrallinie mindestens 10 mal pro Sekunde bestimmt wird,
eine Linse (7, 17, 37, 57) zur Weiterleitung mindestens einer Spektrallinie des aufgespaltenen Raman-Streulichts bzw. Fluoreszenzlichts zu dem Photodetektor (8, 18, 38, 41, 58), und
eine Auswerteeinheit (9, 19, 42, 61) zur Berechnung von Diffusionsparametern, Konzentration, Größe oder Strömungsverhalten von Partikeln in der Probe durch eine Fluktuationsanalyse, vorzugsweise eine Autokorrelation oder eine Frequenzanalyse, der Intensität, oder, bei der Beobachtung von mindestens zwei Spektrallinien bzw. bei der Beobachtung von Raman-Streulicht und Fluoreszenzlicht, einer Kreuzkorrelation der Intensitäten verschiedener Spektrallinien bzw. der Intensitäten des Raman-Streulichts und des Fluoreszenzlichts.

14. Vorrichtung nach Anspruch 13, **dadurch gekennzeichnet, daß** zwischen der Blende (34, 54) und der Linse (35, 55) ein dichroitischer Filter (39) zur Ausblendung von Fluoreszenzlicht oder/und ein weiterer Notchfilter (59) zur Ausblendung von quasielastisch gestreutem Licht aus dem Strahlengang angebracht ist, der das Fluoreszenzlicht oder/und das quasielastisch gestreute Licht auf einen Detektor (40, 60) umlenkt, der mit der Auswerteeinheit (42, 61) verbunden ist.

15. Verwendung eines Verfahrens oder einer Vorrichtung nach einem der vorhergehenden Ansprüche zur Kontrolle von Reaktionen in einem Teilchen oder zwischen Teilchen, zur Analytik und Kontrolle der Herstellung von Partikelmischungen nach Teilchensorte und Teilchengröße, zur Kontrolle von Prozessen der Emulsionspolymerisation, des Teilchenwachstums, der Auffällung von Substanzen auf Teilchen, der Veränderung der Morphologie und Größe von Teilchen, insbesondere von Pigmenten, der Katalyse, der Oberflächenbelegung oder des Wirkstoffscreenings.

## Claims

1. A method for determining diffusion parameters, concentration, size or flow behavior of particles suspended in a liquid sample
wherein
exciting light of a laser is directed into the sample, Raman scattered light from a defined observed volume of the sample, limited to a size from 0.1 µm³ to 50 000 µm³ either by confocal optics with confocal apertures or by the use of optical fibers, is collected and passed to a spectrograph, preferably a grating spectrograph, which resolves it into spectral lines, the intensity of at least one spectral line is measured at least 10 times per second by means of one rapidly responding photodetector having a short relaxation time each, preferably a photomultiplier or a photodiode, and
on the basis of the intensity values measured for the spectral line in question diffusion parameters, concentration, size or flow behavior of the particles to which the spectral line in question can be assigned are calculated via a fluctuation analysis, preferably an autocorrelation or a frequency analysis, of the intensity values.

2. A method as claimed in claim 1, wherein the intensity of at least two spectral lines is measured, on the basis of which, a cross-correlation function preferably being established, the correlation of the diffusion behavior of the particles is determined to which the spectral lines in question can be assigned.

3. A method as claimed in either of the preceding claims, wherein Raman scattered light from the sample is directed by a lens onto a notch filter, and the light transmitted by the notch filter is directed through an aperture and then to the spectrograph.

4. A method as claimed in any one of the preceding claims, wherein the exciting light is introduced into the sample with the aid of fiber optics and/or the Raman scattered light is collected from the sample with the aid of fiber optics.

5. A method as claimed in any one of the preceding claims, wherein, in addition to the Raman scattered light, reflected fluorescence light or quasi-elastically scattered exciting light is collected from the sample and analyzed.

6. A method as claimed in claim 5, wherein a signal of the Raman scattered light is cross-correlated with a signal of the reflected fluorescence light or with a signal of the quasi-elastically scattered exciting light.

7. A method as claimed in any one of the preceding claims, wherein the wavelength of the exciting light is selected so as to be close to an absorption frequency of a particle type present in the sample, so that the Raman scattered light is enhanced by resonance.

8. A method as claimed in any one of the preceding claims, wherein the exciting light and/or the Raman scattered light is enhanced by resonance in a container which contains the light source and/or the sample.

9. A method as claimed in any one of the preceding claims, wherein exciting light of a laser light source (1, 11, 31, 51) is directed to a notch filter (2, 12, 32, 52) and is reflected thereon onto a lens (3, 13, 33, 53) which focuses the exciting light and directs it into a sample (10, 20, 30, 50) containing particles,
Raman scattered light from the sample (10, 20, 30, 50) is collected by means of the lens (3, 13, 33, 53) and is directed via notch filters (2, 12, 32, 52), via an aperture (4, 14, 34, 54) and via a lens (5, 15, 35, 55) onto a spectrograph (6, 16, 36, 56) which resolves the Raman scattered light into spectral lines,
the light of at least one spectral line is directed via a lens (7, 17, 37, 57) directed to one photodetector (8, 18, 38, 41, 58) each, by means of which the intensity of the spectral line is measured at least 10 times per second, and
in an analyzer unit (9, 19, 42, 61), by means of fluctuation analysis, preferably an autocorrelation or a frequency analysis, of the intensity or, if at least two spectral lines are being observed, by means of a cross-correlation of the intensities of spectral lines, diffusion parameters, concentration, size or flow behavior of particles in the sample (10, 20, 30, 50) are determined.

10. A method as claimed in claim 9, wherein light which has been collected from the sample (30) and in addition to Raman scattered light also contains fluorescence light, is directed to a dichroic filter (39) which is situated downstream of the aperture (34), filters the fluorescence light out from the beam path and passes it to a detector (40) which is connected to the analyzer unit (42), the signal of the Raman scattered light and the signal of the fluorescence light being cross-correlated in the analyzer unit (42).

11. A method as claimed in claim 9, wherein light which has been collected from the sample (30) and in addition to Raman scattered light also contains fluorescence light, is separated by the grating spectrograph (36) into a Raman scattered light fraction and a fluorescence light fraction, the fractions being passed separately by a lens (37) into the photodetectors (38, 41) and the signal of the Raman scattered light and the signal of the fluorescence light being cross-correlated in the analyzer unit (42).

12. A method as claimed in claim 9, wherein light which has been collected from the sample (50) and in addition to Raman scattered light also contains quasi-elastically scattered light, is directed to a further notch filter (59) which is situated downstream of the aperture (54), filters quasi-elastically scattered light out from the beam path and passes it to a detector (60) which is connected to the analyzer unit (61), the signal of the Raman scattered light and the signal of the quasi-elastically scattered light being cross-correlated in the analyzer unit (61).

13. An apparatus for determining diffusion parameters, concentration, size or flow behavior of particles in a liquid or other sample which does not restrict the free movement of the particles too greatly, which comprises at least the following elements:
a laser light source (1, 11, 31, 51) for emitting exciting light,
a lens (3, 13, 33, 53) for collimating the exciting light and for introducing the exciting light into a sample (10, 20, 30, 50) containing particles,
a notch filter (2, 12, 32, 52) which is disposed in such a way between the light source (1, 11, 31, 51) and the lens (3, 13, 33, 53) that the exciting light is reflected onto the lens (3, 13, 33, 53), the notch filter (2, 12, 32, 52) and the lens (3, 13, 33, 53) being arranged in such a way with respect to each other and to the sample (10, 20, 30, 50) that Raman scattered light and, where appropriate, fluorescence light is directed from the sample (10, 20, 30, 50) through the lens (3, 13, 33, 53) and the notch filter (2, 12, 32, 52),
an aperture (4, 14, 34, 54) and a lens (5, 15, 35, 55) for onward transmission of the collected Raman scattered light and, if appropriate, fluorescence light from the notch filter (2, 12, 32, 52),
a spectrograph (6, 16, 36, 56) for resolving the Raman scattered light and, where appropriate, fluorescence light which has been passed on by the lens (5, 15, 35, 55), into spectral lines,
at least one photodetector (8, 18, 38, 41, 58) by means of which the intensity of the Raman scattered light or fluorescence light of one spectral line at a time is determined at least 10 times per second,
a lens (7, 17, 37, 57) for onward transmission of at least one spectral line of the resolved Raman scattered light or fluorescence light to the photodetector (8, 18, 38, 41, 58), and
an analyzer unit (9, 19, 42, 61) for calculating diffusion parameters, concentration, size or flow behavior of particles in the sample via a fluctuation analysis, preferably an autocorrelation or a frequency analysis, of the intensity or, if at least two spectral lines or if Raman scattered light and fluorescence light are being observed, via a cross-correlation of the intensities of different spectral lines or the intensities of the Raman scattered light and the fluorescence light, respectively.

14. An apparatus as claimed in claim 13, wherein between the aperture (34, 54) and the lens (35, 55) a dichroic filter (39) for filtering out fluorescence light and/or a further notch filter (59) for filtering out quasi-elastically scattered light from the beam path is disposed which deviates the fluorescence light and/or the quasi-elastically scattered light onto a detector (40, 60) which is connected to the analyzer unit (42, 61).

15. The use of a method or an apparatus as claimed in any one of the preceding claims for monitoring reactions in a particle or between particles, for analytical and monitoring purposes with respect to the preparation of particle mixtures in terms of type and size of particles, for monitoring emulsion polymerization processes, particle growth, the precipitation of substances onto particles, the change in morphology and size of particles, especially of pigments, catalysis, surface coverage or screening of active ingredients.

## Revendications

1. Procédé pour la détermination de paramètres de diffusion, de la concentration, de la taille ou du comportement à l'écoulement de particules en suspension dans un échantillon liquide, **caractérisé en ce que** la lumière d'excitation d'un laser est dirigée dans l'échantillon, la lumière diffusée Raman provenant d'un volume d'observation défini de l'échantillon, qui est limité à une taille de 0,1 µm³ à 50 000 µm³ soit par une optique à foyer commun avec diaphragme à foyer commun soit par utilisation de fibres optiques, est captée et amenée à un spectrographe, de préférence un spectrographe à réseau, qui la décompose en raies spectrales, l'intensité d'au moins une raie spectrale est mesurée au moins 10 fois par seconde avec chaque fois un photodétecteur à réponse rapide avec court temps de relaxation, de préférence un photomultiplicateur ou une photodiode et, d'après les valeurs mesurées de l'intensité pour chaque raie spectrale, les paramètres de diffusion, la concentration, la taille ou le comportement à l'écoulement des particules, auxquelles chaque raie spectrale est à affecter, sont calculés au moyen d'une analyse de fluctuation, de préférence une autocorrélation ou une analyse de fréquence, des valeurs de l'intensité.

2. Procédé selon la revendication 1, **caractérisé en ce que** l'intensité d'au moins deux raies spectrales est mesurée et à partir de celle-ci, de préférence en formant une fonction de corrélation croisée, la corrélation du comportement à la diffusion des particules, auxquelles les diverses raies spectrales sont à affecter, est déterminée.

3. Procédé selon l'une des revendications précédentes, **caractérisé en ce que** la lumière diffusée Raman provenant de l'échantillon est dirigée par une lentille sur un filtre de Notch, et **en ce que** la lumière traversant le filtre de Notch est dirigée à travers un diaphragme et ensuite vers le spectrographe.

4. Procédé selon l'une des revendications précédentes, **caractérisé en ce que** la lumière d'excitation est introduite dans l'échantillon à l'aide de fibres optiques et/ou la lumière diffusée Raman est captée hors de l'échantillon à l'aide de fibres optiques.

5. Procédé selon l'une des revendications précédentes, **caractérisé en ce que**, en plus de la lumière diffusée Raman, une lumière fluorescente réfléchie ou une lumière d'excitation diffusée de façon quasiélastique est captée hors de l'échantillon et évaluée.

6. Procédé selon la revendication 5, **caractérisé en ce qu'**un signal de la lumière diffusée Raman est à corrélation croisée avec un signal de la lumière fluorescente réfléchie ou avec un signal de la lumière d'excitation diffusée de façon quasiélastique.

7. Procédé selon l'une des revendications précédentes, **caractérisé en ce que** la longueur d'onde de la lumière d'excitation est choisie de façon qu'elle soit proche d'une fréquence d'absorption d'une sorte de particule qui se trouve dans l'échantillon, de sorte que la lumière diffusée Raman est renforcée par résonance.

8. Procédé selon l'une des revendications précédentes, **caractérisé en ce que** la lumière d'excitation et/ou la lumière diffusée Raman est renforcée par résonance dans un récipient contenant la source lumineuse et/ou l'échantillon.

9. Procédé selon l'une des revendications précédentes, **caractérisé en ce que** la lumière d'excitation d'une source lumineuse laser (1, 11, 31, 51) est dirigée vers un filtre de Notch (2, 12, 32, 52) et, sur celui-ci, est réfléchie sur une lentille (3, 13, 33, 53), qui met au point la lumière d'excitation et la dirige dans un échantillon (10, 20, 30, 50) contenant des particules,
la lumière diffusée Raman est captée hors de l'échantillon (10, 20, 30, 50) au moyen d'une lentille (3, 13, 33, 53) et, à travers un filtre de Notch (2, 12, 32, 52), à travers un diaphragme (4, 14, 34, 54) et à travers une lentille (5, 15, 35, 55), est dirigée sur un spectrographe (6, 16, 36, 56), qui décompose la lumière diffusée Raman en raies spectrales, la lumière d'au moins une raie spectrale est dirigée à travers une lentille (7, 17, 37, 57) vers un photodétecteur (8, 18, 38, 41, 58) avec lequel l'intensité de la raie spectrale est mesurée au moins 10 fois par seconde, et
dans une unité d'évaluation (9, 19, 42, 61), au moyen d'une analyse de fluctuation, de préférence une autocorrélation ou une analyse de fréquence, de l'intensité, ou, dans le cas de l'observation d'au moins deux raies spectrales, au moyen d'une corrélation croisée des intensités de raies spectrales, les paramètres de diffusion, la concentration, la taille ou le comportement à l'écoulement de particules dans l'échantillon (10, 20, 30, 50) sont déterminés.

10. Procédé selon la revendication 9, **caractérisé en ce que** la lumière captée hors de l'échantillon (30), qui, outre la lumière diffusée Raman, comprend de la lumière fluorescente, est dirigée sur un filtre dichroïque (39) disposé après le diaphragme (34), qui extrait la lumière fluorescente de la trajectoire du faisceau et l'amène à un détecteur (40) qui est relié à l'unité d'évaluation (42), dans lequel le signal de la lumière diffusée Raman et le signal de la lumière fluorescente sont en corrélation croisée dans l'unité d'évaluation (42).

11. Procédé selon la revendication 9, **caractérisé en ce que** la lumière captée hors de l'échantillon (30), qui, outre la lumière diffusée Raman, comprend de la lumière fluorescente, est séparée par le spectrographe à réseau (36) en une proportion de lumière diffusée Raman et une proportion de lumière fluorescente, dans lequel les proportions, séparées à travers la lentille (37), sont dirigées dans les photodétecteurs (38, 41) et le signal de la lumière diffusée Raman et le signal de la lumière fluorescente sont en corrélation croisée dans l'unité d'évaluation (42).

12. Procédé selon la revendication 9, **caractérisé en ce que** la lumière captée hors de l'échantillon (50), qui, outre la lumière diffusée Raman, comprend de la lumière diffusée de façon quasiélastique, est dirigée sur un autre filtre de Notch (59) disposé après le diaphragme (54), qui extrait de la trajectoire du faisceau la lumière diffusée de façon quasiélastique et l'amène à un détecteur (60) qui est relié à l'unité d'évaluation (61), dans lequel le signal de la lumière diffusée Raman et le signal de la lumière diffusée de façon quasiélastique sont en corrélation croisée dans l'unité d'évaluation (61).

13. Dispositif pour la détermination de paramètres de diffusion, de la concentration, de la taille ou du comportement à l'écoulement de particules dans un échantillon liquide ou autre, qui ne limite pas trop la libre mobilité des particules, qui comprend au moins les éléments suivants :
une source lumineuse laser (1, 11, 31, 51) pour l'émission de lumière d'excitation, une lentille (3, 13, 33, 53) pour la mise en faisceau de la lumière d'excitation et pour l'introduction de la lumière d'excitation dans un échantillon (10, 20, 30, 50) comprenant des particules, un filtre de Notch (2, 12, 32, 52), qui est disposé entre la source lumineuse (1, 11, 31, 51) et la lentille (3, 13, 33, 53) de façon que la lumière d'excitation soit réfléchie sur la lentille (3, 13, 33, 53), le filtre de Notch (2, 12, 32, 52) et la lentille (3, 13, 33, 53) étant disposé l'un par rapport à l'autre et par rapport à l'échantillon (10, 20, 30, 50) de façon que la lumière diffusée Raman et éventuellement la lumière fluorescente soit dirigée hors de l'échantillon (10, 20, 30, 50) à travers la lentille (3, 13, 33, 53) et le filtre de Notch (2, 12, 32, 52),
un diaphragme (4, 14, 34, 54) et une lentille (5, 15, 35, 55) pour la transmission de la lumière diffusée Raman captée, et éventuellement de la lumière fluorescente, à partir du filtre de Notch (2, 12, 32, 52),
un spectrographe (6, 16, 36, 56) pour la décomposition de la lumière diffusée Raman amenée par la lentille (5, 15, 35, 55), et éventuellement de la lumière fluorescente, en raies spectrales,
au moins un photodétecteur (8, 18, 38, 41, 58) au moyen duquel l'intensité de la lumière diffusée Raman ou de la lumière fluorescente est déterminée dans une raie spectrale au moins 10 fois par seconde,
une lentille (7, 17, 37, 57) pour la transmission d'au moins une raie spectrale de la lumière diffusée Raman ou de la lumière fluorescente décomposée vers le photodétecteur (8, 18, 38, 41, 58) et
une unité d'évaluation (9, 19, 42, 61) pour le calcul de paramètres de diffusion, de la concentration, de la taille ou du comportement à l'écoulement de particules dans l'échantillon au moyen d'une analyse de fluctuation, de préférence une autocorrélation ou une analyse de fréquence, de l'intensité, ou, dans le cas de l'observation d'au moins deux raies spectrales ou de l'observation de la lumière diffusée Raman et de la lumière fluorescente, d'une corrélation croisée des intensités de différentes raies spectrales ou des intensités de la lumière diffusée Raman et de la lumière fluorescente.

14. Dispositif selon la revendication 13, **caractérisé en ce que**, entre le diaphragme (34, 54) et la lentille (35, 55), est disposé un filtre dichroïque (39) pour l'extraction de lumière fluorescente et/ou un autre filtre de Notch (59) pour l'extraction de lumière diffusée de façon quasiélastique, hors de la trajectoire du faisceau, qui dévie la lumière fluorescente et/ou la lumière diffusée de façon quasiélastique sur un détecteur (40, 60) qui est relié avec l'unité d'évaluation (42, 61).

15. Utilisation d'un procédé ou d'un dispositif selon l'une des revendications précédentes, pour le contrôle de réactions dans une particule ou entre particules, pour l'analyse et le contrôle de la production de mélanges de particules par sorte de particules et taille de particules, pour le contrôle de processus de la polymérisation d'émulsions, de la croissance de particules, de la précipitation de substances sur des particules, de la transformation de la morphologie et de la taille de particules, en particulier de pigments, de la catalyse, de l'occupation en surface ou du tamisage de substances actives.
